# EUROPÄISCHE PATENTSCHRIFT

(11) **EP 3 002 630 B1**
(45) Veröffentlichungstag und Bekanntmachung des Hinweises auf die Patenterteilung: **03.04.2019**
(21) Anmeldenummer: 15185701.8
(22) Anmeldetag: 17.09.2015
(51) Int. Cl.: G03B 15/06, G03B 27/32, G06K 9/24, G03B 17/56, H04N 1/00

(54) **MOBILER DOKUMENTENLESER**
MOBILE DOCUMENT READER
LECTEUR DE DOCUMENTS MOBILE

(30) Priorität: 19.09.2014 DE 102014113583
(43) Veröffentlichungstag der Anmeldung: 06.04.2016
(73) Patentinhaber: Bundesdruckerei GmbH, 10969 Berlin (DE)
(72) Erfinder: SCHÜRING, Andreas, 30827 Garbsen (DE); COBERNUS, Martin, 30419 Hannover (DE); RABELER, Uwe, 30453 Hannover (DE); SCHÜRING, Jan-Ole, 30827 Garbsen (DE)
(74) Vertreter: Patentship Patentanwaltsgesellschaft mbH

(56) Entgegenhaltungen:
- EP-A1- 2 566 146
- EP-A2- 1 026 620
- US-A1- 2002 105 684
- US-A1- 2005 134 692

## Beschreibung

Die vorliegende Erfindung betrifft das Gebiet der optischen Dokumentenerfassung.

Die Offenlegungsschrift US 2005/134692 A1 zeigt eine planare Lichtquelle, die eine Lichtleiterplatte umfasst. Auf die Lichtleiterplatte kann ein Objekt gelegt werden, welches dann mittels der Lichtquelle über die Lichtleiterplatte beleuchtet werden kann.

Die Offenlegungsschrift US 2002/105684 A1 zeigt ein erstes Gehäuseteil umfassend eine Glasfläche, auf welche ein zu scannendes Objekt gelegt werden kann. Ferner ist ein zweites Gehäuseteil vorgesehen. Zwischen dem ersten Gehäuseteil und dem zweiten Gehäuseteil ist ein Mittelteil gebildet, wobei die drei Teile derart ineinander verschoben werden können, dass diese zum einen ineinandergeschoben und zum anderen auch wieder auseinandergeschoben werden können.

Die Offenlegungsschrift EP 2 566 146 A1 zeigt einen mobilen Fotoscanner.

Die Offenlegungsschrift EP 1 026 620 A2 zeigt einen Handscanner.

Zur optischen Erfassung eines Identifikationsdokumentes, beispielsweise eines Reisepasses oder eines Personalausweises, werden üblicherweise stationäre Dokumentenlesegeräte benutzt. Derartige Dokumentenlesegeräte sind üblicherweise ausgestattet mit einer transparenten Dokumentenauflage, auf welche ein Identifikationsdokument auflegbar ist, sowie einer Bildkamera zur Aufnahme eines optischen Bildes des Identifikationsdokumentes. Anhand des optischen Bildes des Identifikationsdokumentes können sowohl Personendaten als auch die Echtheit des Identifikationsdokumentes erfasst bzw. überprüft werden. Stationäre Dokumentenlesegeräte können zwar in unterschiedlichen Wellenlängenbereichen, beispielsweise bei Infrarotlicht, eingesetzt werden. Zudem können sie gegen Störlicht abgeschirmt werden. Stationäre Dokumentenlesegeräte eigenen sich jedoch nicht für einen mobilen Einsatz, beispielsweise im Rahmen einer polizeilichen Personenüberprüfung.

Mobile Bildaufnahmen sind zwar mittels einer Bildkamera, beispielsweise mittels einer Kamera eines Smartphones, prinzipiell möglich. Derartige Bildaufnahmen sind jedoch stark anfällig für Störlicht.

Es ist daher die Aufgabe der vorliegenden Erfindung, ein Konzept zur mobilen Dokumentenerfassung mit einer reduzierten Störlichtanfälligkeit zu schaffen.

Diese Aufgabe wird durch die Merkmale der unabhängigen Ansprüche gelöst. Vorteilhafte Weiterbildungsformen sind Gegenstand der abhängigen Ansprüche, der Beschreibung sowie der beigefügten Figuren.

Die vorliegende Erfindung basiert auf der Erkenntnis, dass die obige Aufgabe durch die Verwendung eines lichtundurchlässigen, beispielsweise faltbaren oder ausziehbaren Balges, gelöst werden kann, welche einen Raum zwischen einer Kamera und einem Identifikationsdokument gegen Fremd- bzw. Störlicht abschirmt. Innerhalb dieses abgeschirmten Raumes kann das Identifikationsdokument gezielt mit Licht einer vorbestimmten Wellenlänge, beispielsweise mit Infrarotlicht, Ultraviolettlicht oder Weißlicht, beleuchtet werden. Der undurchlässige Balg ist bevorzugt zusammenlegbar bzw. zusammenfaltbar, so dass ein Dokumentenlesegerät, welches mit dem lichtundurchlässigen Balg ausgestattet ist, transportierbar und daher mobil einsetzbar ist.

Gemäß einem Aspekt wird ein mobiler Dokumentenleser für die optische Erfassung eines Identifikationsdokumentes mittels einer Bildkamera offenbart, mit einer Dokumentenauflage für die Aufnahme des Identifikationsdokumentes, einer Kameraaufnahme mit einer Kameraöffnung zur Aufnahme eines Bildobjektivs und einem lichtundurchlässigen Balg, welcher sich zwischen der Dokumentenauflage und der Kameraaufnahme faltbar erstreckt und ausgebildet ist, einen Bildaufnahmeraum zwischen der Dokumentenauflage und der Kameraaufnahme zu bilden.

Der Begriff "lichtundurchlässig" bedeutet, dass die Intensität eines Lichts in einem Wellenlängenbereich, beispielsweise in einem Infrarot-Wellenlängenbereich, Ultraviolett-Wellenlängenbereich oder Weißlicht-Wellenlängenbereich, durch den lichtundurchlässigen Balg reduziert wird, so dass das Licht durch den lichtundurchlässigen Balg mit einer geringeren Intensität durchtritt oder nicht durchgelassen wird.

Gemäß einer Ausführungsform weist der lichtundurchlässige Balg einen ersten umlaufenden Rand und einen zweiten umlaufenden Rand auf, wobei der erste umlaufende Rand mit der Dokumentenauflage, insbesondere mit einem umlaufenden Rand der Dokumentenauflage, verbunden ist, und wobei der zweite umlaufende Rand mit der Kameraaufnahme, insbesondere mit einem umlaufenden Rand der Kameraaufnahme, gebildet ist.

Der lichtundurchlässige Balg umschließt somit den ersten umlaufenden Rand und den zweiten umlaufenden Rand und bildet einen abgeschirmten Raum zwischen dem ersten umlaufenden Rand und dem zweiten umlaufenden Rand. Hierbei kann sich der lichtundurchlässige Balg beispielsweise röhrenförmig zwischen dem ersten umlaufenden Rand und dem zweiten umlaufenden Rand erstrecken. Die durch den undurchlässigen Balg gebildete, äußere geometrische Form kann durch die geometrische Form des jeweiligen umlaufenden Randes bestimmt werden. Sind die umlaufenden Ränder beispielsweise rechteckförmig, so erstreckt sich der abgeschirmte Bildaufnahmeraum zwischen den Rändern ebenfalls rechteckförmig, d.h. mit einem rechteckförmigen Querschnitt. Sind die Randumfänge der umlaufenden Ränder unterschiedlich, so kann der lichtundurchlässige Balg beispielsweise einen pyramidenförmigen Bildaufnahmeraum umschließen, welcher sich zwischen den beiden Rändern erstreckt. Dadurch wird es möglich, das Identifikationsdokument in den Bildaufnahmeraum einzuführen.

Gemäß einer Ausführungsform sind der erste umlaufende Rand und/oder der zweite umlaufende Rand kreisförmig, ellipsenförmig oder rechteckförmig.

Gemäß einer Ausführungsform weist der zweite Rand einen geringeren Randumfang als der erste Rand auf. Dadurch erstreckt sich der lichtundurchlässige Balg beispielsweise pyramidenförmig oder trichterförmig in Richtung der Kameraaufnahme.

Gemäß einer Ausführungsform umfasst der lichtundurchlässige Balg einen flexiblen Stoff. Dadurch kann der lichtundurchlässige Balg zusammengelegt werden.

Gemäß einer Ausführungsform ist der lichtundurchlässige Balg zumindest teilweise faltbar, insbesondere in Richtung der Kameraöffnung faltbar. Auf diese Weise kann der lichtundurchlässige Balg zumindest teilweise harmonikaartig zusammengelegt werden.

Gemäß einer Ausführungsform umfasst der lichtundurchlässige Balg eine Mehrzahl von faltbaren Platten oder Rahmen, insbesondere umlaufend angeordneten Platten oder umlaufenden Rahmen. Die faltbaren Platten sind beispielsweise lichtundurchlässig ausgebildet. Die faltbaren Platten können beispielsweise falzförmig miteinander verbunden sein. Die faltbaren Platten können beispielsweise aus Kunststoff bestehen, wobei ein flexibler Übergang zwischen benachbarten Platten durch eine Kunststoffverjüngung oder durch einen elastischen Kunststoff realisiert werden kann.

Gemäß einer Ausführungsform ist der Balg manuell ausziehbar oder manuell zusammendrückbar oder manuell zusammenfaltbar. Durch die manuelle Betätigung des lichtundurchlässigen Balges kann dieser zusammengelegt oder ausgezogen werden.

Gemäß einer Ausführungsform erstreckt sich der lichtundurchlässige Balg zwischen der Dokumentenauflage und der Kameraaufnahme zylinderförmig, quaderförmig, kegelförmig, insbesondere zur Kameraaufnahme hin zusammenlaufend kegelförmig, oder pyramidenförmig, insbesondere zur Kameraaufnahme hin zusammenlaufend pyramidenförmig. Durch die geometrische Form des lichtundurchlässigen Balges wird die geometrische Form des Bildaufnahmeraumes definiert. Auf diese Weise ist es möglich, unterschiedlich ausgebildete Dokumentenleser für unterschiedliche Verwendungszwecke, beispielsweise an bestimmten Größen von Identifikationsdokumente angepasst, zu realisieren.

Gemäß einer Ausführungsform weist die Dokumentenauflage eine Grundplatte, insbesondere eine lichtundurchlässige Grundplatte und ein oberhalb der Grundplatte angeordnetes lichttransparentes Fenster auf, wobei das Identifikationsdokument in einen Aufnahmeraum zwischen der Grundplatte und dem lichttransparenten Fenster einführbar, insbesondere einklemmbar ist. Die lichtdurchlässige Grundplatte ist beispielsweise mit dem lichtdurchlässigen Balg verbunden, so dass beispielsweise bei einem Aufklappen des lichtundurchlässigen Balges die lichtdurchlässige Grundplatte mit aufgeklappt wird, so dass das Identifikationsdokument unter die lichtdurchsichtige Grundplatte gelegt werden kann bzw. durch diese gehalten werden kann.

Gemäß einer Ausführungsform umfasst die Dokumentenauflage eine Beleuchtungsquelle zur Beleuchtung des Identifikationsdokumentes mit Licht, insbesondere in einem Weißlicht, Infrarotlicht oder Ultraviolettlicht. Die Beleuchtungsquelle kann beispielsweise an der Dokumentenauflage zur Durchleuchtung des Identifikationsdokumentes oder an der Kameraaufnahme zum Anstrahlen bzw. Anleuchten des Identifikationsdokumentes angebracht sein.

Gemäß einer Ausführungsform umfasst die Dokumentenauflage eine Steuerungsschnittstelle zum Empfangen eines Steuersignals, insbesondere eines Synchronisationssignals, zur Steuerung der Beleuchtungsquelle. Die Steuerungsschnittstelle kann beispielsweise eine Kommunikationsschnittstelle, beispielsweise eine USB-Kommunikationsschnittstelle umfassen.

Gemäß einer Ausführungsform umfasst die Steuerungsschnittstelle eine drahtlose Kommunikationsschnittstelle, insbesondere eine Bluetooth- oder eine WLAN-Kommunikationsschnittstelle. Die drahtlose Kommunikationsschnittstelle kann beispielsweise einen Empfänger und/oder einen Sender aufweisen, um eine drahtlose Datenkommunikation mit beispielsweise einem Computer zu ermöglichen, welcher zur Steuerung des mobilen Dokumentenlesers, insbesondere zur Steuerung der Beleuchtungsquelle, eingesetzt werden kann.

Gemäß einer Ausführungsform umfasst die Dokumentenauflage eine Energiequelle, insbesondere eine über eine an der Dokumentenauflage angeordnete Ladebuchse aufladbare Energiequelle. Die Energiequelle kann beispielsweise eine wiederaufladbare Batterie sein, welche über eine Ladebuchse des WLAN-Dokumentenlesers geladen werden kann.

Gemäß einer Ausführungsform weist die Kameraaufnahme eine Trägerplatte auf, auf welcher die Bildkamera mit dem Bildobjektiv oder ein Kommunikationsgerät, insbesondere Smartphone, mit dem Bildobjektiv, anordenbar ist. Die Trägerplatte ist vorgesehen, die Bildkamera mit dem Bildobjektiv zu halten bzw. zu positionieren, so dass das Bildobjektiv in der Kameraöffnung angeordnet ist. Ist die Bildkamera ein Element eines mobilen Kommunikationsgerätes, wie beispielsweise eines Smartphones, so kann die Trägerplatte vorgesehen sein, das Smartphone zu haltern, so dass das Bildobjektiv in der Kameraöffnung angeordnet ist. Auf diese Weise ist es möglich, das Identifikationsdokument ohne störendes Störlicht mittels eines mobilen Kommunikationsgerätes zu erfassen.

Weitere Ausführungsbeispiele der Erfindung werden Bezug nehmend auf die beiliegenden Zeichnungen näher erläutert. Es zeigen:
- Fig. 1: eine schematische Darstellung eine mobilen Dokumentenlesers;
- Fig. 2: eine schematische Darstellung des Dokumentenlesers aus Fig. 1 mit zusammengelegtem lichtundurchlässigen Balg; und
- Fig. 3: eine Draufsicht auf einen lichtdurchsichtigen Balg gemäß einer Ausführungsform.

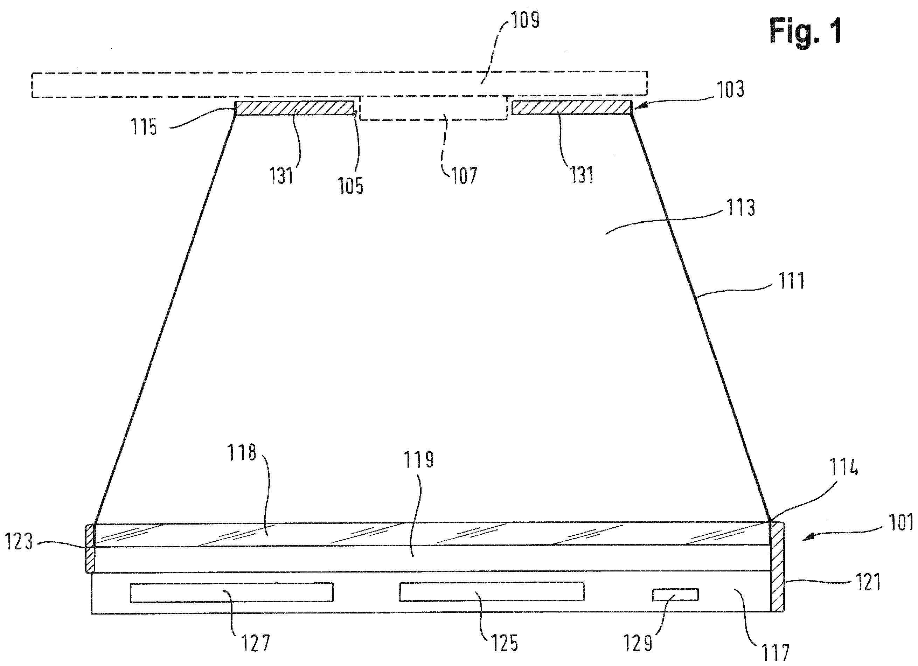

Fig. 1 zeigt eine schematische Darstellung eines mobilen Dokumentenlesers gemäß einer Ausführungsform. Der mobile Dokumentenleser umfasst eine Dokumentenauflage 101 für die Aufnahme eines in Fig. 1 nicht dargestellten Identifikationsdokumentes. Ferner umfasst der mobile Dokumentenleser eine Kameraaufnahme 103, welche eine Kameraöffnung 105 für die Aufnahme eines Bildobjektivs 107 einer Bildkamera 109 umfasst.

Der mobile Dokumentenleser umfasst ferner einen lichtundurchlässigen Balg 111, welcher sich zwischen der Dokumentenauflage 101 und der Kameraaufnahme 103 faltbar erstreckt und ausgebildet ist, einen Bildaufnahmeraum 113 zwischen der Dokumentenauflage 101 und der Kameraaufnahme 103 zu bilden bzw. zu umschließen.

Der lichtundurchlässige Balg 111 umfasst einen ersten umlaufenden Rand 114 und einen zweiten umlaufenden Rand 115.

Der lichtundurchlässige Balg 111 ist mit seinem ersten umlaufenden Rand 114 mit der Dokumentenauflage 101 verbunden. Der zweite umlaufende Rand 115 ist hingegen mit der Kameraaufnahme verbunden. Die umlaufenden Ränder 114 und 115 definieren beidseitige Öffnungen des lichtundurchlässigen Balges. Der Bildaufnahmeraum 113 wird somit durch den lichtundurchlässigen Balg 111 einerseits sowie nach unten hin durch die Dokumentenauflage 101 und nach oben hin durch die Kameraaufnahme 103 verschränkt. Auf diese Weise ist es möglich, den Bildaufnahmeraum gegen äußeres Störlicht abzuschirmen.

Die Dokumentenauflage 101 umfasst eine Grundplatte 117 sowie ein lichttransparentes Fenster 118, beispielsweise eine lichttransparente Platte, welche oberhalb der Grundplatte 117 angeordnet sind. Zwischen der Grundplatte 117 und dem lichttransparenten Fenster 118 ist ein Aufnahmeraum 119 für das Identifikationsdokument gebildet. Das Identifikationsdokument wird für die Aufnahme in den Aufnahmeraum 119 eingelegt, so dass das Identifikationsdokument einerseits durch die Grundplatte 117 und andererseits durch das durchsichtige Fenster 118 bedeckt ist. Somit kann das Identifikationsdokument mittels der Bildkamera 109 optisch erfasst werden.

Gemäß einer Ausführungsform ist das lichttransparente Fenster 118 mittels eines Scharniers 121 mit der Grundplatte verbunden. Auf diese Weise kann das lichttransparente Fenster 118 verschwenkt werden. Ist der lichtundurchlässige Balg 111 mit dem lichttransparenten Fenster 118 verbunden, so kann der lichtundurchlässige Balg 111 zusammen mit dem lichttransparenten Fenster 118 aufgeklappt werden, so dass das Identifikationsdokument in den Aufnahmeraum 111 eingelegt und bei einem Zurückschwenken des lichttransparenten Fensters 118 durch dieses eingeklemmt und fixiert werden kann. Gemäß einer Ausführungsform kann das lichttransparente Fenster 118 mit der Grundplatte 117 mittels eines Verschlusses 123, beispielsweise mittels eines Verriegelungsverschlusses 123, lösbar verbunden werden.

Gemäß einer Ausführungsform ist in der Grundplatte 117 eine Steuerungsschnittstelle 125 angeordnet, welche beispielsweise zur Steuerung einer in Fig. 1 nicht dargestellten Beleuchtungsquelle zur Beleuchtung des Identifikationsdokumentes verwendet werden kann. Hierbei kann beispielsweise ein Beleuchtungszeitpunkt festgelegt werden. Die Steuerungsschnittstelle 125 ist bevorzugt in der Grundplatte 117 angeordnet.

Gemäß einer Ausführungsform umfasst der mobile Dokumentenleser eine Energiequelle 127, beispielsweise einen Akku, welcher in der Grundplatte 117 angeordnet ist. Die Energiequelle 127 kann beispielsweise mittels einer optionalen Ladebuchse 129, welche ebenfalls in der Grundplatte gebildet sein kann, mit Energie versorgt und dadurch aufgeladen werden. Die Energiequelle 127 kann beispielsweise zur Versorgung der in Fig. 1 nicht dargestellten Beleuchtungsquelle mit elektrischer Energie herangezogen werden. Darüber hinaus kann die Energiequelle 127 die Steuerungsschnittstelle 125 mit elektrischer Energie versorgen.

Die Kameraaufnahme 103 umfasst gemäß einer Ausführungsform eine Trägerplatte 131, welche zur Halterung des Bildobjektives 107 vorgesehen sein kann. Die Trägerplatte 131 ist beispielsweise lichtundurchlässig, wobei die Kameraöffnung 105 in der Trägerplatte 131 gebildet sein kann. Die Trägerplatte 131 kann beispielsweise vorgesehen sein, die Bildkamera 109 bzw. ein mobiles Kommunikationsgerät, das die Bildkamera 109 enthält, beispielsweise ein Smartphone, in der in Fig. 1 gestrichelt schematisch dargestellten Weise zu haltern. Hierbei kann das Kommunikationsgerät auf die Trägerplatte 131 aufgelegt werden, so dass das Bildobjektiv 107 in die Kameraöffnung 105 eingeführt bzw. über dieser positioniert wird, so dass eine optische Aufnahme des unterhalb der lichttransparenten Fensters 118 angeordneten Identifikationsdokumentes möglich ist.

An der Trägerplatte 131 kann die in Fig. 1 nicht dargestellte Beleuchtungsquelle, beispielsweise eine LED, zur Beleuchtung des Identifikationsdokumentes angebracht werden. Wie vorstehend ausgeführt, kann die Beleuchtungsquelle im Bereich der Grundplatte 117, welche eine Bodenplatte bildet, angebracht werden. Gemäß einer weiteren Ausführungsform kann ein direktes Einkoppeln des Lichtes zur Beleuchtung des Identifikationsdokumentes in das lichttransparente Fenster 117 realisiert werden. Hierbei kann das lichttransparente Fenster 118 beispielsweise eine Fresnel-Linse umfassen, welche bei einem Lichtaustritt das austretende Licht in Richtung des Identifikationsdokumentes lenkt.

Gemäß einer Ausführungsform ist der lichtundurchlässige Balg 111 an der Trägerplatte 131 befestigt und kann mit dieser hochgehoben bzw. angezogen werden. Dadurch entsteht der aufgespannte Bildaufnahmeraum 113, welcher beispielsweise pyramiden- oder kegelstumpfförmig ist. Der lichtundurchlässige Balg kann hierbei beispielsweise eine flexible Stoffbahn, wie Bühnenmolton, umfassen, welche die Trägerplatte 131 und das lichtdurchsichtige Fenster 118 oder die Grundplatte 117 verbindet.

In dem in Fig. 1 dargestellten Ausführungsbeispiel ist der lichtundurchlässige Balg 111 auseinandergezogen, wodurch der Bildaufnahmeraum 113 entsteht, in welchem eine Bildaufnahme des Identifikationsdokumentes ohne störende Lichteinflüsse von außen erzeugt werden kann.

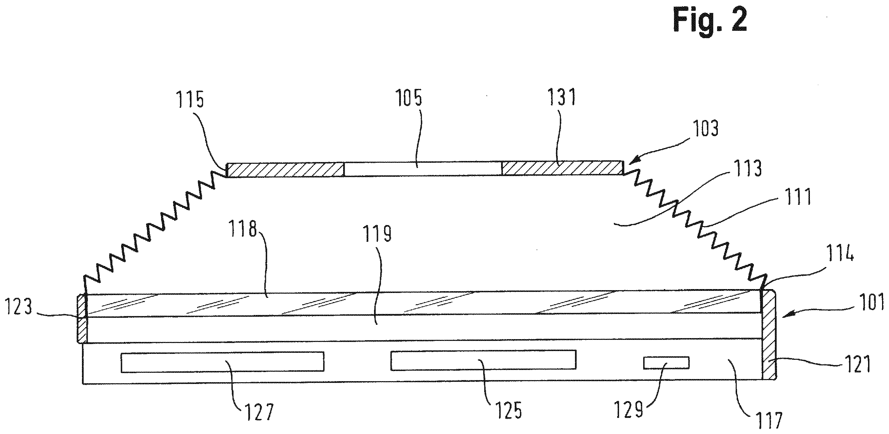

Nach Gebrauch kann der in Fig. 1 dargestellte Dokumentenleser zusammengelegt werden, wie es in Fig. 2 dargestellt ist. Dabei kann der lichtundurchlässige Balg 111 in der in Fig. 2 dargestellten Weise zusammengefaltet sein. Umfasst der lichtundurchlässige Balg 111 miteinander verbundene, faltbare Platten, so kann dieser, wie beispielhaft in Fig. 2 dargestellt, zusammengelegt werden. Bei der Verwendung von faltbaren Platten kann die Stabilität des lichtundurchlässigen Balges 111 erhöht werden.

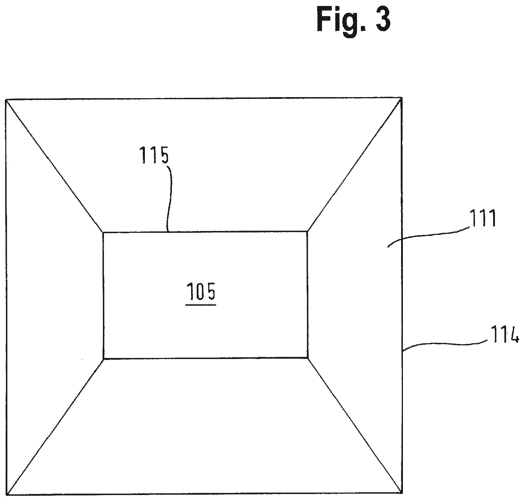

Fig. 3 zeigt eine Draufsicht auf den in den Fig. 1 und 2 dargestellten mobilen Dokumentenleser, bei dem der erste, untere, umlaufende Rand 114 und der obere umlaufende Rand 115 jeweils rechteckförmig ausgebildet sind. Dabei sind die Umläufe der umlaufenden Ränder 114, 115 unterschiedlich, so dass der lichtundurchlässige Balg 111 pyramidenförmig in Richtung der Öffnung 105 zuläuft.

### Bezugszeichenliste

- 101: Dokumentenauflage
- 103: Kameraaufnahme
- 105: Kameraöffnung
- 107: Bildobjektiv
- 109: Bildkamera
- 111: Balg
- 113: Bildaufnahmeraum
- 114: erster umlaufender Rand
- 115: zweiter umlaufender Rand
- 117: Grundplatte
- 118: Fenster, lichtdurchlässige Platte
- 119: Aufnahmeraum
- 121: Scharnier
- 123: Verschluss
- 125: Steuerungsschnittstelle
- 127: Energiequelle
- 129: Ladebuchse
- 131: Trägerplatte

## Patentansprüche

1. Mobiler Dokumentenleser für die optische Erfassung eines Identifikationsdokumentes mittels einer Bildkamera, mit:
einer Dokumentenauflage (101) für die Aufnahme des Identifikationsdokumentes;
einer Kameraaufnahme (103) mit einer Kameraöffnung zur Aufnahme eines Bildobjektivs; **gekennzeichnet durch**
einen lichtundurchlässigen Balg (111), welcher sich zwischen der Dokumentenauflage (101) und der Kameraaufnahme (103) faltbar erstreckt und ausgebildet ist, einen Bildaufnahmeraum (113) zwischen der Dokumentenauflage (101) und der Kameraaufnahme (103) zu bilden,
wobei die Dokumentenauflage (101) eine Grundplatte (117) und ein oberhalb der Grundplatte (117) angeordnetes lichttransparentes Fenster (118) aufweist, wobei das Identifikationsdokument in einen Aufnahmeraum (119) zwischen der Grundplatte (117) und dem lichttransparenten Fenster (118) einführbar ist.

2. Mobiler Dokumentenleser nach Anspruch 1, wobei der lichtundurchlässige Balg (111) einen ersten umlaufenden Rand (114) und einen zweiten umlaufenden Rand (115) aufweist, wobei der erste umlaufende Rand (114) mit der Dokumentenauflage (101), insbesondere seitlich mit einem umlaufenden Rand der Dokumentenauflage (101), verbunden ist, und wobei der zweite umlaufende Rand (115) mit der Kameraaufnahme (103), insbesondere mit einem umlaufenden Rand der Kameraaufnahme (103), gebildet ist.

3. Mobiler Dokumentenleser nach Anspruch 2, wobei erste umlaufende Rand (114) des lichtundurchlässigen Balges (111) mit der Dokumentenauflage (101) lösbar oder aufklappbar, insbesondere mittels eines Scharniers und/oder eines lösbaren Verschlusses, verbunden ist.

4. Mobiler Dokumentenleser nach Anspruch 2 oder 3, wobei der zweite umlaufende Rand (115) einen geringeren Randumfang als der erste umlaufende Rand (114) aufweist.

5. Mobiler Dokumentenleser nach einem der vorstehenden Ansprüche, wobei der lichtundurchlässige Balg (111) einen flexiblen Stoff umfasst.

6. Mobiler Dokumentenleser nach einem der vorstehenden Ansprüche, wobei der lichtundurchlässige Balg (111) zumindest teilweise faltbar ist, insbesondere in Richtung der Kameraaufnahme (103) oder der Dokumentenauflage (101) faltbar ist.

7. Mobiler Dokumentenleser nach einem der vorstehenden Ansprüche, wobei der lichtundurchlässige Balg (111) eine Mehrzahl von faltbaren Platten oder Rahmen, insbesondere umlaufend angeordneten Platten oder umlaufenden Rahmen umfasst.

8. Mobiler Dokumentenleser nach einem der vorstehenden Ansprüche, wobei der lichtundurchlässige Balg (111) manuell ausziehbar oder manuell zusammendrückbar oder manuell zusammenfaltbar ist.

9. Mobiler Dokumentenleser nach einem der vorstehenden Ansprüche, wobei der lichtundurchlässige Balg (111) sich zwischen der Dokumentenauflage (101) und der Kameraaufnahme (103) zylinderförmig, quaderförmig, kegelförmig, insbesondere zur Kameraaufnahme (103) hin zusammenlaufend kegelförmig, oder pyramidenförmig, insbesondere zur Kameraaufnahme (103) hin zusammenlaufend pyramidenförmig, erstreckt.

10. Mobiler Dokumentenleser nach einem der vorstehenden Ansprüche, wobei die Grundplatte (117) eine lichtundurchlässige Grundplatte (117) ist und wobei das Identifikationsdokument in den Aufnahmeraum (119) zwischen der Grundplatte (117) und dem lichttransparenten Fenster (118) insbesondere einklemmbar ist.

11. Mobiler Dokumentenleser nach einem der vorstehenden Ansprüche, wobei die Dokumentenauflage (101) eine Beleuchtungsquelle zur Beleuchtung des Identifikationsdokumentes mit Licht, insbesondere in einem Weißlicht, Infrarotlicht oder Ultraviolettlicht, umfasst.

12. Mobiler Dokumentenleser nach Anspruch 11, mit einer Steuerungsschnittstelle (125) zum Empfangen eines Steuersignals, insbesondere eines Synchronisationssignals, zur Steuerung der Beleuchtungsquelle.

13. Mobiler Dokumentenleser nach Anspruch 12, wobei die Steuerungsschnittstelle (125) eine drahtlose Kommunikationsschnittstelle, insbesondere eine Bluetooth- oder eine WLAN-Kommunikationsschnittstelle umfasst.

14. Mobiler Dokumentenleser nach einem der vorstehenden Ansprüche, wobei die Dokumentenauflage (101) eine Energiequelle (127), insbesondere eine über eine an der Dokumentenauflage (101) angeordnete Ladebuchse (129) aufladbare Energiequelle (127) umfasst.

15. Mobiler Dokumentenleser nach einem der vorstehenden Ansprüche, wobei die Kameraaufnahme (103) eine Trägerplatte (131) aufweist, auf welcher die Bildkamera mit dem Bildobjektiv oder ein Kommunikationsgerät, insbesondere Smartphone, mit dem Bildobjektiv, anordenbar ist.

## Claims

1. Mobile document reader for optically acquiring an identification document by means of an image camera, having:
a document bed (101) for accommodating the identification document;
a camera mount (103) having a camera opening for accommodating an image lens; **characterised by**
a light-impermeable bellows (111), which extends between the document bed (101) and the camera mount (103) in a foldable manner and is designed to form an image recording space (113) between the document bed (101) and the camera mount (103),
wherein the document bed (101) has a base plate (117) and a light-transparent window (118)located above the base plate (117), wherein the identification document can be introduced into a receiving space (119) between the base plate (117) and the light-transparent window (118),

2. Mobile document reader according to Claim 1, wherein the light-impermeable bellows (111) has a first peripheral edge (114) and a second peripheral edge (115), wherein the first peripheral edge (114) is connected to the document bed (101), in particular laterally with a peripheral edge of the document bed (101), and wherein the second peripheral edge (115) is formed with the camera mount (103), in particular with a peripheral edge of the camera mount (103).

3. Mobile document reader according to Claim 2, wherein the first peripheral edge (114) of the light-impermeable bellows (111) is connected to the document bed (101) in a releasable or openable manner, in particular by means of a hinge and/or a releasable closure.

4. Mobile document reader according to Claim 2 or 3, wherein the second peripheral edge (115) has a smaller edge perimeter than the first peripheral edge (114).

5. Mobile document reader according to any one of the preceding Claims, wherein the light-impermeable bellows (111) comprises a flexible material.

6. Mobile document reader according to any one of the preceding Claims, wherein the light-impermeable bellows (111) is at least partially foldable, in particular foldable in the direction of the camera mount (103) or the document bed (101).

7. Mobile document reader according to any one of the preceding Claims, wherein the light-impermeable bellows (111) comprises a plurality of foldable plates or frames, in particular peripherally arranged plates or peripheral frames.

8. Mobile document reader according to any one of the preceding Claims, wherein the light-impermeable bellows (111) is manually extendible or manually compressible or manually collapsible.

9. Mobile document reader according to any one of the preceding Claims, wherein the light-impermeable bellows (111) extends between the document bed (101) and the camera mount (103) in a cylindrical, cuboidal, conical, in particular tapering toward the camera mount (103) in a conical manner, or in a pyramidal manner, in particular tapering toward the camera mount (103) in a pyramidal manner.

10. Mobile document reader according to any one of the preceding Claims, wherein the base plate (117) is a light-impermeable base plate (117), and wherein the identification document can in particular be clamped into the receiving space (119) between the base plate (117) and the light-transparent window (118) .

11. Mobile document reader according to any one of the preceding Claims, wherein the document bed (101) comprises an illumination source for illuminating the identification document with light, in particular in a white light, infrared light or ultraviolet light.

12. Mobile document reader according to Claim 11, having a control interface (125) for receiving a control signal, in particular a synchronisation signal, for controlling the illumination source.

13. Mobile document reader according to Claim 12, wherein the control interface (125) comprises a wireless communication interface, in particular a Bluetooth or a WLAN communication interface.

14. Mobile document reader according to any one of the preceding Claims, wherein the document bed (101) comprises an energy source (127), in particular an energy source (127) which can be charged via a charging socket (129) located on the document bed (101).

15. Mobile document reader according to any one of the preceding Claims, wherein the camera mount (103) has a support plate (131) on which the image camera with the image lens or a communication device, in particular a smartphone, can be located.

## Revendications

1. Lecteur de documents mobile pour la saisie optique d'un document d'identification au moyen d'une caméra photographique, comprenant :
un support de document (101) destiné à recevoir le document d'identification ;
un support de caméra (103) comprenant une ouverture de caméra pour la réception d'un objectif photographique ; **caractérisé par**
un soufflet opaque (111) qui s'étend de manière pliable entre le support de document (101) et le support de caméra (103) et est conçu pour former un espace de prise de vue (113) entre le support de document (101) et le support de caméra (103),
le support de document (101) présentant une plaque de base (117) et une fenêtre transparente (118) disposée au-dessus de la plaque de base (117), le document d'identification pouvant être introduit dans un espace de réception (119) entre la plaque de base (117) et la fenêtre transparente (118).

2. Lecteur de documents mobile selon la revendication 1, dans lequel le soufflet opaque (111) présente un premier bord périphérique (114) et un second bord périphérique (115), le premier bord périphérique (114) étant relié au support de document (101), en particulier relié latéralement avec un bord périphérique du support de document (101), et le second bord périphérique (115) comportant le support de caméra (103), en particulier un bord périphérique du support de caméra (103).

3. Lecteur de documents mobile selon la revendication 2, dans lequel le premier bord périphérique (114) du soufflet opaque (111) est relié de manière amovible ou rabattable au support de document (101), en particulier au moyen d'une charnière et/ou d'une fermeture amovible.

4. Lecteur de documents mobile selon la revendication 2 ou 3, dans lequel le second bord périphérique (115) présente une circonférence inférieure à celle du premier bord périphérique (114).

5. Lecteur de documents mobile selon l'une des revendications précédentes, dans lequel le soufflet opaque (111) comprend une étoffe flexible.

6. Lecteur de documents mobile selon l'une des revendications précédentes, dans lequel le soufflet opaque (111) est au moins partiellement pliable, en particulier pliable en direction du support de caméra (103) ou du support de document (101).

7. Lecteur de documents mobile selon l'une des revendications précédentes, dans lequel le soufflet opaque (111) comprend une pluralité de plaques ou de cadres pliables, en particulier des cadres périphériques ou des plaques disposées de manière périphérique.

8. Lecteur de documents mobile selon l'une des revendications précédentes, dans lequel le soufflet opaque (111) est déployable manuellement ou compressible manuellement ou repliable manuellement.

9. Lecteur de documents mobile selon l'une des revendications précédentes, dans lequel le soufflet opaque (111) s'étend entre le support de document (101) et le support de caméra (103) selon une forme de cylindre, de parallélépipède ou de cône, en particulier s'étend en convergeant selon une forme de cône ou de pyramide jusqu'au support de caméra (103), en particulier s'étend en convergeant selon une forme de pyramide jusqu'au support de caméra (103).

10. Lecteur de documents mobile selon l'une des revendications précédentes, dans lequel la plaque de base (117) est une plaque de base (117) opaque et dans lequel le document d'identification peut être notamment enserré dans l'espace de réception (119) entre la plaque de base (117) et la fenêtre transparente (118).

11. Lecteur de documents mobile selon l'une des revendications précédentes, dans lequel le support de document (101) comprend une source d'éclairage pour éclairer le document d'identification avec de la lumière, en particulier dans une lumière blanche, une lumière infrarouge ou une lumière ultraviolette.

12. Lecteur de documents mobile selon la revendication 11, comprenant une interface de commande (125) pour la réception d'un signal de commande, en particulier un signal de synchronisation, pour la commande de la source d'éclairage.

13. Lecteur de documents mobile selon la revendication 12, dans lequel l'interface de commande (125) comprend une interface de communication sans fil, en particulier une interface de communication Bluetooth ou WLAN.

14. Lecteur de documents mobile selon l'une des revendications précédentes, dans lequel le support de document (101) comprend une source d'énergie (127), notamment une source d'énergie (127) pouvant être chargée par le biais d'une prise de charge (129) disposée sur le support de document (101).

15. Lecteur de documents mobile selon l'une des revendications précédentes, dans lequel le support de caméra (103) présente une plaque de support (131) destinée à la disposition de la caméra photographique présentant l'objectif photographique ou d'un appareil de communication, en particulier un smartphone, présentant l'objectif photographique.
